# EUROPÄISCHE PATENTSCHRIFT

(11) **EP 1 322 410 B1**
(45) Veröffentlichungstag und Bekanntmachung des Hinweises auf die Patenterteilung: **08.12.2004**
(21) Anmeldenummer: 01980467.3
(22) Anmeldetag: 02.10.2001
(51) Int. Cl.: B01F 5/12, B01F 5/14

(54) **VORRICHTUNG ZUM VORMISCHEN UND EINSPEISEN VON ADDITIVEN IN EINEM POLYMERSCHMELZESTROM**
DEVICE FOR MIXING ADDITIVES AND INTRODUCING THE SAME INTO A POLYMER MELT STREAM
DISPOSITIF POUR PREMELANGER DES ADDITIFS ET LES INTRODUIRE DANS UN FLUX DE POLYMERE EN FUSION

(30) Priorität: 05.10.2000 DE 10049617
(43) Veröffentlichungstag der Anmeldung: 02.07.2003
(73) Patentinhaber: Zimmer AG, 60388 Frankfurt (DE)
(72) Erfinder: FINDER, Horst, 63110 Rodgau (DE); HELMSTORFF, Bernd, 65205 Wiesbaden (DE)
(74) Vertreter: Luderschmidt, Schüler & Partner GbR
(86) Internationale Anmeldenummer: PCT/EP2001/011367
(87) Internationale Veröffentlichungsnummer: WO 2002/028520

(56) Entgegenhaltungen:
- EP-A- 0 913 188
- DE-C- 198 376
- US-A- 5 430 077

## Beschreibung

Die vorliegende Erfindung betrifft eine Vorrichtung zum Vormischen und Einspeisen von Additiven in einen Polymerschmelzestrom.

Die Einspeisung von Additiven in einen Polymerschmelzestrom ist bekannt. In Chemiefasern/Textilindustrie, 36./88. Jahrgang, Januar 1986, Seiten 24 bis 29 wird ein Verfahren zur Einspeisung von Additiven in einen Polymerschmelzestrom beschrieben, bei dem einem aus einem Endreaktor oder Extruder austretenden unmodifizierten Hauptschmelzestrom ein Teilstrom entnommen und über einen mit speziellen Knetelementen ausgerüsteten Zweiwellenextruder geleitet wird. Mit einem kontinuierlichen Dosiersystem werden die Additive dem Zweiwellenextruder zugeführt und in die Polymerschmelze eingearbeitet. Im Anschluß daran wird der mit Additiven beladene Teilstrom wieder mit dem Hauptschmelzestrom vermischt, wobei eine gleichmäßige Vermischung durch statische Mischelemente erreicht wird.

Die DE 40 39 857 A1 offenbart eine Vorrichtung zur direkten, kontinuierlichen Modifizierung von Polymerschmelzen, bei der wieder einem Hauptschmelzestrom ein Teilschmelzestrom entnommen und in einen Extruder geleitet wird. Die zuzuführenden Additive gelangen über eine Förderpumpe in den Extruder, und im Anschluß daran wird der derart modifizierte Teilschmelzestrom wieder dem Hauptschmelzestrom zugeführt.

Aus der DE 198 41 376 A1 ist ein Verfahren zur Einspeisung von Additiven in einen Polymerschmelzestrom bekannt, bei dem ein Teilstrom von dem Polymerschmelzestrom abgezweigt und in weitere Teilströme aufgegliedert wird. Die letztgenannten Teilströme werden in eine Planetenradpumpe geleitet, der mindestens ein Additiv zugeführt wird. Im Anschluß daran werden die Teilströme wieder zusammengeführt und durch einen statischen Mischer geleitet. Danach wird der Teilstrom wieder dem Hauptschmelzestrom zugeführt.

Bei den bekannten Vorrichtungen und Verfahren besteht der Nachteil, daß an den Stellen des Hauptschmelzestroms, an denen ein Teil der Polymerschmelze entnommen bzw. die mit Additiven angereicherte Polymerschmelze wieder in den Hauptschmelzestrom zurückgeführt wird, Bereiche entstehen, in denen es zu teils unerwünscht hohen Verweilzeiten oder sogar zu Ablagerungen der Polymerschmelze kommt. Darüber hinaus sind die Vorrichtungen mit einem großen apparativen Aufwand verbunden.

Der Erfindung liegt somit die Aufgabe zugrunde, eine Vorrichtung zum Vormischen und Einspeisen eines Additivs in einen Polymerschmelzestrom zu schaffen, die geringe Verweilzeiten des Polymers erlaubt und mit einem geringen apparativen Aufwand verbunden ist.

Die Lösung dieser Aufgabe erfolgt mit den im Patentanspruch 1 angegebenen Merkmalen. Vorteilhafte Ausführungsformen der Erfindung sind Gegenstand der Unteransprüche.

Die erfindungsgemäße Vorrichtung zum Vormischen und Einspeisen von Additiven in einen Polymerschmelzestrom weist ein Leitungselement mit einem ersten Kanal und einem seitlich in den ersten Kanal mündenden zweiten Kanal auf. Das Leitungselement wird in eine Leitung eingesetzt, in der der Polymerschmelzestrom geführt ist, so daß die Polymerschmelze durch den zweiten und ersten Kanal fließt.

Darüber hinaus ist eine Planetenradpumpe mit mindestens n=3 Planetenrädern vorgesehen, zu der Zulauf- und Ablaufkanäle führen, wobei jedem Planetenrad der Planetenradpumpe ein Zulauf- und ein Ablaufkanal zugeordnet ist. Mindestens ein und maximal n-1 Zulaufkanäle sind als Additiv-Zulaufkanäle und die verbleibenden Zulaufkanäle sind als Polymerschmelze-Zulaufkanäle ausgebildet. Unter einem Additiv-Zulaufkanal ist ein Kanal zu verstehen, über den von einer entsprechenden Einrichtung ein Additiv in die Planetenradpumpe eingebracht werden kann, während die Polymerschmelze-Zulaufkanäle mit einer Mündung an den Polymerschmelzestrom und mit der anderen Mündung in die Planetenradpumpe reichen.

Erfindungsgemäß ist ferner ein Einspeiselement vorgesehen, das strömend mit den Ablaufkanälen in Verbindung steht und sich unter Ausbildung eines Ringkanales in den ersten Kanal erstreckt. Die der Planetenradpumpe abgewandten Mündungen der Polymerschmelze-Zulaufkanäle sind um das Einspeiselement angeordnet. Das Einspeiselement kann ein rohrartiges Endstück sein, wie beispielsweise eine Düse. Der Ringkanal ist dann der das Einspeiselelement umgebende Raum zwischen der Außenwand des Einspeiselementes und der Wandung des ersten Kanals. Dieser muß nicht notwendigerweise kreisringförmig sein.

Im Betrieb wird ein Teil der Polymerschmelze durch die Mündungen der Polymerschmelze-Zulaufkanäle in Richtung der Planetenradpumpe aus dem Polymerschmelzestrom gesogen. Da die Mündungen der Polymerschmelze-Zulaufkanäle um das Einspeiselement verteilt sind, wird die Polymerschmelze gleichmäßig aus dem Ringkanal gesogen. Diese Zwangsführung ermöglicht, das keinerlei Bereiche vorhanden sind, in denen die Polymerschmelze aufgrund geringerer Geschwindigkeit länger verweilt oder sich sogar ablagert. Des weiteren ist der apparative Aufwand der erfindungsgemäßen Vorrichtung geringer, da die Entnahme eines Teiles der Polymerschmelze und die Rückführung der mit dem Additiv angereicherten Polymerschmelze an der gleichen Stelle, d. h. im gleichen Rohrstutzen, erfolgt. In der Hauptleitung für den Polymerschmelzestrom ist somit lediglich das Leitungselement der erfindungsgemäßen Vorrichtung notwendig und auf die zwei in den bekannten Vorrichtungen benötigten Anschlußstutzen zur Entnahme bzw. Rückführung kann verzichtet werden.

Die Mündungen der Polymerschmelze-Zulaufkanäle sind vorzugsweise symmetrisch um das Einspeiselement angeordnet, so daß die Polymerschmelze gleichmäßig aus dem Polymerschmelzestrom gesogen werden kann. Eine symmetrische Anordnung kann sowohl auf einer Punktsymmetrie als auch auf einer Achsensymmetrie beruhen. So können die Mündungen beispielsweise kreisförmig oder oval um das Einspeiselement angeordnet sein.

Da der Polymerschmelzestrom zuerst durch den zweiten Kanal und dann durch den ersten Kanal fließt, besteht in dem dem zweiten Kanal abgewandten Bereich des Ringkanales die größte Gefahr, daß sich das Polymer ablagert. Daher ist in einer bevorzugten Ausführungsform der erfindungsgemäßen Vorrichtung in diesem Bereich eine Mündung eines Polymerschmelze-Zulaufkanales angeordnet.

In einer vorteilhaften Ausführungsform der erfindungsgemäßen Vorrichtung ist das Einspeiselement in einem den Ablaufkanälen abgewandten Bereich konisch ausgebildet. Auf diese Weise wird ein weitgehend gleichmäßiger Fluß des Polymerschmelzestroms im Ringkanal erzielt.

Vorzugsweise ist der zweite Kanal in einer weiteren Ausführungsform der erfindungsgemäßen Vorrichtung in einem rechten Winkel zu dem ersten Kanal angeordnet.

Da bei relativ niedriger Anzahl an Additiv-Zulaufkanälen einige Ablaufkanäle lediglich die reine Polymerschmelze führen, ist zwischen den Ablaufkanälen und dem Einspeiselement mindestens ein statischer Mischer angeordnet, um eine stärkere Vermischung der mit Additiv beladenen Polymerschmelze mit der reinen Polymerschmelze zu gewährleisten. Selbst wenn alle Ablaufleitungen bereits ein Additiv-Polymerschmelze-Gemisch führen, trägt der statische Mischer zu einer besseren Vermischung bei.

In einer weiteren vorteilhaften Ausführungsform des erfindungsgemäßen Vorrichtung sind zwei in Strömungsrichtung hintereinander angeordnete statische Mischer vorgesehen. Die Ablaufkanäle, die ein Additiv-Polymerschmelze-Gemisch fuhren, erstrecken sich in den in Strömungsrichtung ersten statischen Mischer, wohingegen sich die Ablaufkanäle, die reine Polymerschmelze führen, in den in Strömungsrichtung zweiten statischen Mischer erstrecken. Eine derartige Anordnung führt zu besonders intensiver Vermischung von Additiv und Polymerschmelze.

Um eine einfachere Wartung, Reparatur und Handhabung zu gewährleisten, sind die Planetenradpumpe, die Zulaufkanäle, die Ablaufkanäle und das Einspeiselement vorteilhafterweise starr miteinander verbunden und über ein gemeinsames Befestigungsmittel an dem Leitungselement befestigt. Sollten statische Mischer vorgesehen sein, so sind diese vorzugsweise ebenfalls mit den obengenannten Elementen starr verbunden. Die starr verbundenen Elemente können einfach und schnell gemeinsam von dem Leitungselement, in dem der Polymerschmelzestrom fließt, getrennt werden.

Das Befestigungsmittel weist vorzugsweise einen Flansch auf, der an dem Leitungselement angeflanscht werden kann.

Im folgenden wird die vorliegende Erfindung an Hand von Ausführungsbeispielen unter Bezugnahme auf die beigefügten Figuren näher erläutert.

Es zeigen:
- Fig. 1: eine perspektivische, teilweise geschnittene Darstellung der erfindungsgemäßen Vorrichtung in einer ersten Ausführungsform,
- Fig. 2: eine perspektivische, teilweise geschnittene weitere Darstellung der Vorrichtung von Fig. 1,
- Fig. 3 bis 5: perspektivische Darstellungen des zweiten Zwischenelementes von Fig. 1 bzw. 2 in teilweise geschnittener Darstellung,
- Fig. 6 bis 7: perspektivische Darstellungen des zweiten Zwischenelementes von Fig. 3 bzw. 4.
- Fig. 8: eine Seitenansicht der Pumpenbaugruppe von Fig. 1 bzw. 2 in geschnittener Darstellung,
- Fig. 9: eine Draufsicht auf die Schnittlinie A-A von Fig. 7.

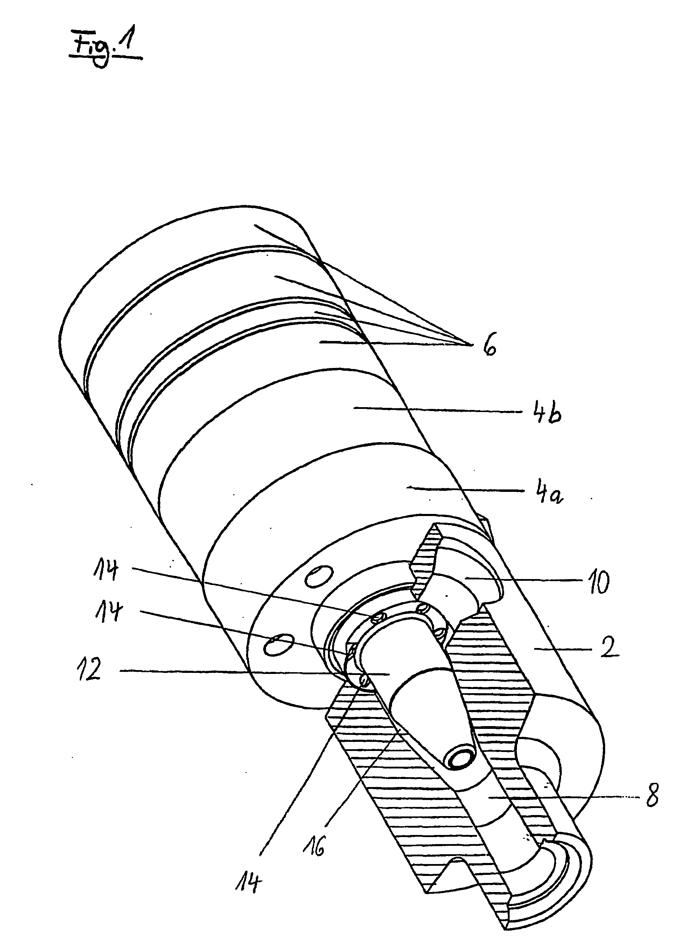

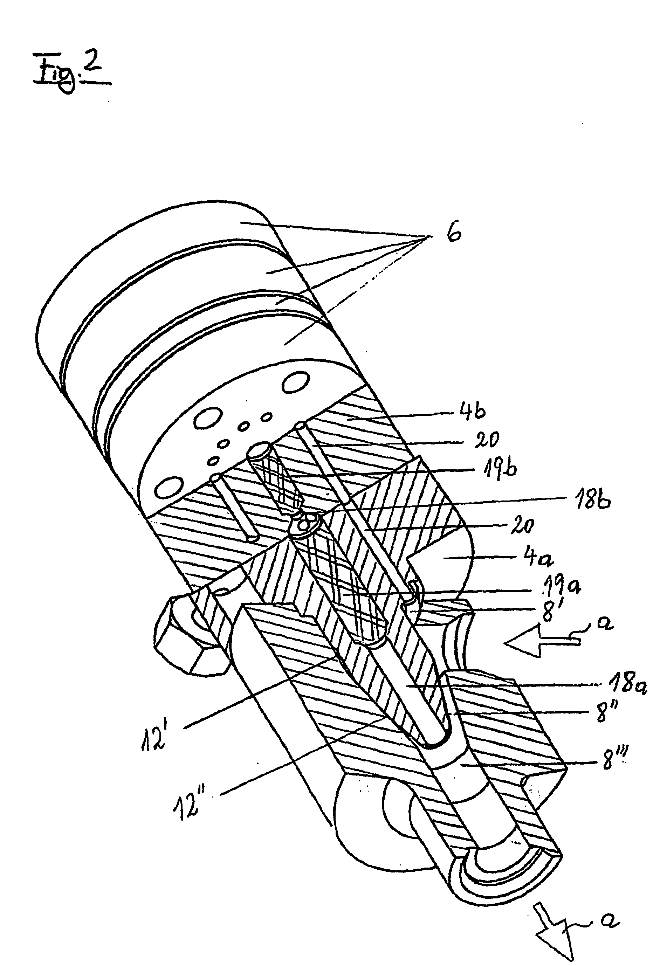

Fig. 1 zeigt die erfindungsgemäße Vorrichtung in einer ersten Ausführungsform. Die Vorrichtung weist ein Leitungselement 2, ein erstes und ein zweites Zwischenelement 4a,4b und eine Pumpenbaugruppe 6 auf, die in der vorgenannten Reihenfolge übereinander angeordnet sind. Das Leitungselement 2 umfaßt einen ersten Kanal 8, der sich axial durch das gesamte Leitungselement 2 erstreckt, und eine zweiten Kanal 10. Der zweite Kanal 10 erstreckt sich von der Außenseite des Leitungselementes 2 bis in den ersten Kanal 8, wobei erster und zweiter Kanal 8,10 rechtwinklig zueinander verlaufen. Das erste Zwischenelement 4a ist im wesentlichen kreisscheibenförmig ausgebildet und kann derart an das Leitungselement 2 angeflanscht werden, daß der erste Kanal 8 an einem Ende verschlossen ist. Das erste Zwischenelement 4a weist ein im wesentlichen rohrförmiges Einspeiselement 12 auf, das sich nach dem Anflanschen des ersten Zwischenelementes 4a an das Leitungselement 2 in den ersten Kanal 8 erstreckt. An der nach unten weisenden Seite des ersten Zwischenelementes 4a sind außerdem fünf Mündungen 14 vorgesehen. Die Mündungen 14 gehören zu Zulaufkanälen 20 (Fig. 2). Die Mündungen 14 sind kreisförmig, vorzugsweise symmetrisch, um das Einspeiselement 12 angeordnet.

Fig. 2 zeigt eine perspektivische, teilweise geschnittene weitere Darstellung der Vorrichtung von Fig. 1. Der nicht dargestellte Polymerschmelzestrom fließt bei Betrieb der Vorrichtung zuerst durch den zweiten Kanal 10 und im Anschluß daran durch den ersten Kanal 8, wobei die Strömungsrichtung durch die Pfeile a angedeutet ist. Das Einspeiselement 12 weist einen ersten Abschnitt 12', der im wesentlichen zylindrisch ausgebildet ist, und einen dem ersten Zwischenelement 4a abgewandten zweiten Abschnitt 12" auf, der in Strömungsrichtung konisch zusammenläuft. In Analogie dazu weist der erste Kanal einen ersten zylindrischen Abschnitt 8' und einen konischen zweiten Abschnitt 8" auf. Zwischen der Wandung des ersten Kanales 8 und der Außenwand des Einspeiselementes 12 ist ein Ringkanal 16 ausgebildet, der über die gesamte Länge einen im wesentlichen gleichbleibenden Strömungsquerschnitt hat. An den zweiten Abschnitt 8" des ersten Kanals 8 schließt sich in Strömungsrichtung ein dritter Abschnitt 8''' an, dessen Strömungsquerschnitt wiederum dem Strömungsquerschnitt des zweiten Kanals 10 entspricht.

Innerhalb des Einspeiselementes 12 erstreckt sich in axialer Richtung ein erster Einspeisekanal 18a bis zu der Seite des ersten Zwischenelementes 4a, an der das zweite Zwischenelement 4b angebracht ist, wobei in dem dem zweiten Zwischenelement 4b zugewandten Bereich des ersten Einspeisekanales 18a ein erster statischer Mischer 19a angeordnet ist. In axialer Richtung erstreckt sich in dem zweiten Zwischenelement 4b ein zweiter Einspeisekanal 18b, der mit dem ersten Einspeisekanal 18a fluchtend angeordnet ist. Innerhalb des zweiten Einspeisekanales 18b ist ein weiterer statischer Mischer 19b angeordnet. Die statischen Mischer 19a, 19b sind lediglich schematisch angedeutet und können beispielsweise aus mehreren versetzt angeordneten Leitelementen bestehen.

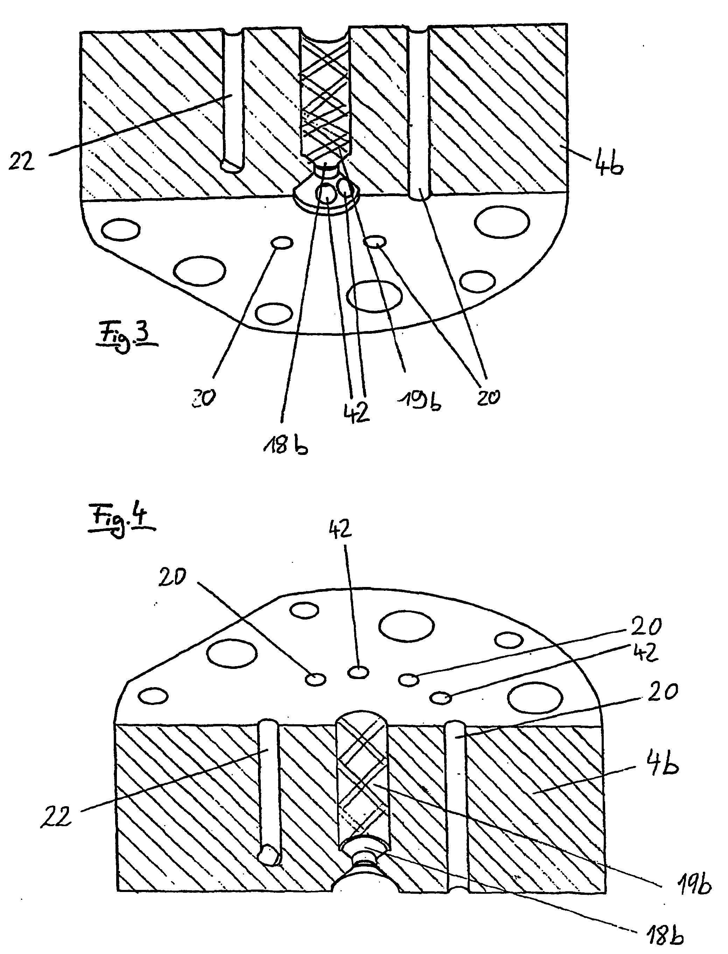

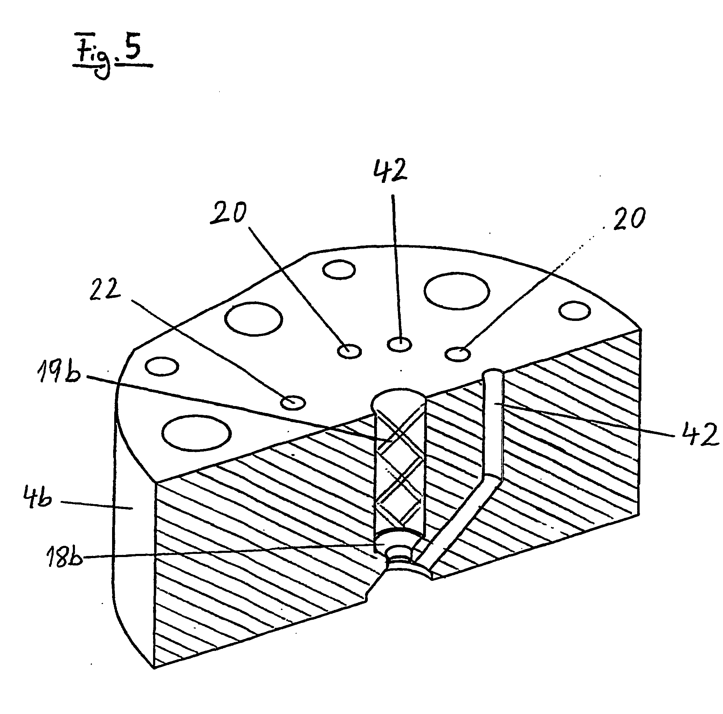

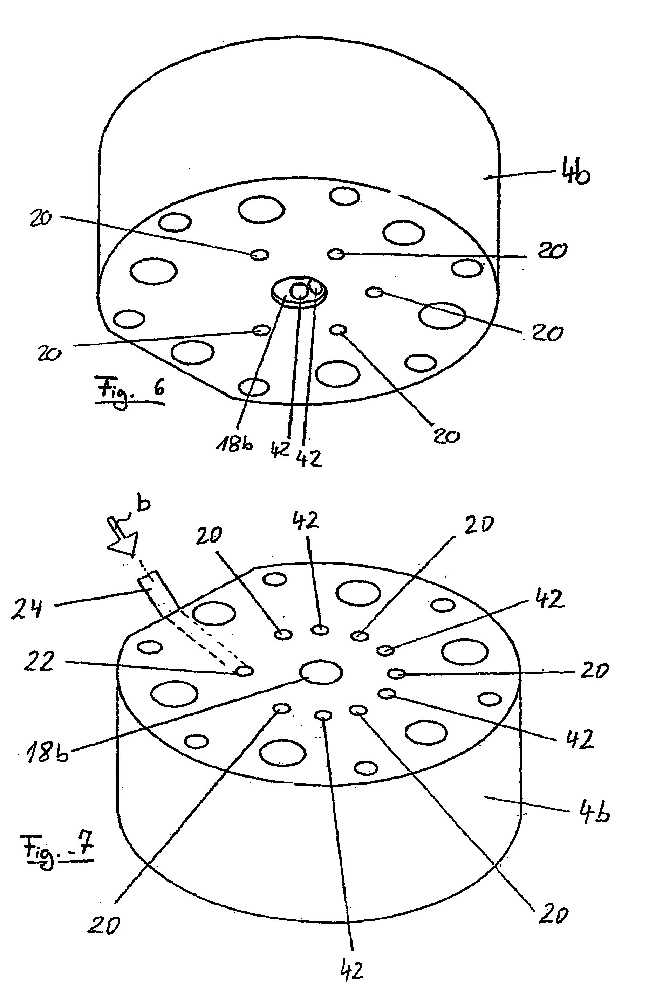

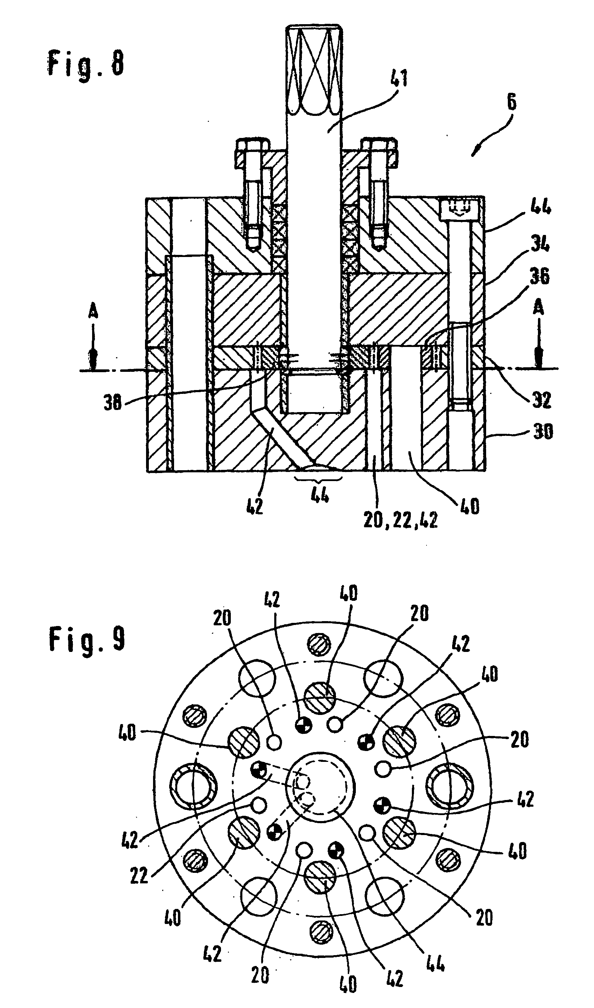

Die Fig. 3 bis 5 bzw. 6 und 7 zeigen das zweite Zwischenelement von Fig. 1 in einer teilweise geschnittenen bzw. nicht geschnittenen perspektivischen Darstellung. Parallel zu dem zweiten Einspeisekanal 18b erstrecken sich fünf Polymerschmelze-Zulaufkanäle 20 durch das zweite Zwischenelement 4b. Diese Polymerschmelze-Zulaufkanäle 20 erstrecken sich außerdem durch das erste Zwischenelement 4a, wobei deren Mündungen 14 in Fig. 1 bzw. 2 zu sehen sind. Ferner ist ein Additiv-Zulaufkanal 22 vorgesehen, der sich nach außen bis zu einer Seite des zweiten Zwischenelementes 4b erstreckt (Fig. 7), an der das Additiv über eine Leitung 24 o. ä. zugeführt werden kann. Der Additiv-Zulaufkanal 22 ist innerhalb des zweiten Zwischenelementes 4b angeordnet, um lange Leitungswege zu vermeiden, wobei die Additivzugabe durch den Pfeil b gekennzeichnet ist (Fig. 7).

Fig. 8 zeigt eine Seitenansicht der Pumpenbaugruppe 6 in geschnittener Darstellung. Die Pumpenbaugruppe 6 weist eine Planetenradpumpe mit einer unteren Platte 30, einer mittleren Platte 32 und einer oberen Platte 34 auf, wobei innerhalb von Aussparungen in der mittleren Platte 32 sechs Planetenräder 36 (nur eines ist dargestellt) und ein Stirnzahnrad 38 angeordnet sind. Die Planetenräder 36 sind jeweils auf einer drehbaren Welle 40 und das Stirnzahnrad 38 auf einer Antriebswelle 41 angeordnet. Die Antriebswelle 41 erstreckt sich durch die obere Platte 34 und eine daran angrenzende Befestigungsplatte 44. Die Befestigungsplatte 44 dient der Befestigung einer nicht dargestellten Antriebseinheit zum Antreiben der Antriebswelle 41.

Aus Fig. 8 wie auch aus Fig. 9, die eine Draufsicht auf die Schnittlinie A-A von Fig. 8 zeigt, ist ersichtlich, daß sich die Polymerschmelze-Zulaufkanäle 20 bzw. der Additiv-Zulaufkanal 22 durch die untere Platte 30 der Planetenradpumpe vertikal nach oben bis in den Bereich der Planetenräder 36 erstrecken und dort enden. Gemäß dem Prinzip einer Planetenradpumpe wird der Strom von einem Zulaufkanal 20 bzw. 22 in zwei gleiche Teile in die Zahnlücken von Sonnen- und Planetenrad aufgeteilt. Dementsprechend sind einem Ablaufkanal die beiden Hälften von zwei benachbarten Zulaufströmen aus den Zulaufkanälen zugeordnet. In unmittelbarer Nähe eines jeden Planetenrades 36 ist jeweils die Eintrittsmündung eines Ablaufkanales 42 angeordnet. Die Ablaufkanäle 42 erstrecken sich durch die untere Platte 30 der Planetenradpumpe. Diejenigen Ablaufkanäle 42, die u. a. das Additiv beinhalten, verlaufen dabei schräg nach innen, so daß diese in einem gemeinsamen Bereich 44 enden. Diejenigen Ablaufkanäle 42, die lediglich Polymerschmelze führen, verlaufen senkrecht durch die untere Platte 30. Bei zusammengesetzter Vorrichtung liegen der Bereich 44 und das nach oben weisende Ende des zweiten Einspeisekanales 18b deckungsgleich übereinander.

Im folgenden wird die Funktionsweise der Vorrichtung in der ersten Ausführungsform beschrieben. Der Polymerschmelzestrom fließt in Richtung der Pfeile a (Fig. 2) durch den zweiten und den ersten Kanal 10,8. Die Antriebseinheit (nicht dargestellt) betreibt die Planetenradpumpe (Fig. 8) über die Antriebswelle 41, wodurch ein Teil des Polymerschmelzestroms durch die Mündungen 14 (Fig. 1) in die Polymerschmelze-Zulaufkanäle 20 (Fig. 2) gesogen wird. Parallel hierzu wird ein Additiv aus der Leitung 24 in den Additiv-Zulaufkanal 22 gedrückt. Über die Zulaufkanäle 20,22 gelangt die Polymerschmelze bzw. das Additiv in die Planetenradpumpe (Fig. 7 und 8). Innerhalb der Planetenradpumpe kommt es bei den das Additiv fördernden Zahnrädern zur Kombination von Additiv und Polymerschmelze. Danach fließt durch die beiden dem Additiv-Zulaufkanal 22 unmittelbar benachbarten Ablaufkanäle 42 ein Additiv-Polymerschmelze-Gemisch, wohingegen durch die anderen Ablaufkanäle 42 reine Polymerschmelze zurückfließt (Fig. 8). Über die Ablaufkanäle 42, die das Additiv-Polymerschmelze-Gemisch führen, gelangt das Additiv-Polymerschmelze-Gemisch in den zweiten statischen Mischer 19b innerhalb des zweiten Einspeisekanals 18b (Fig. 2), um dort intensiv vermischt zu werden. Im Anschluß daran tritt das so entstandene Gemisch aus dem zweiten Einspeisekanal 18b aus und gelangt in den ersten Einspeisekanal 18a, wo es mit der Polymerschmelze aus den anderen Ablaufkanälen 42 (Fig.5) vermengt wird.

Anstatt lediglich einen Additiv-Zulaufkanal 22 vorzusehen, können auch ein oder mehrere Polymerschmelze-Zulaufkanäle 20 zur Zufuhrung von Additiv in die Planetenradpumpe genutzt werden. Hiebei werden die Zulaufkanäle im zweiten Zwischenelement 4b über einen Ringkanal zusammengeführt und über eine gemeinsame Zulaufbohrung mit Additiv beaufschlagt.

## Patentansprüche

1. Vorrichtung zum Vormischen und Einspeisen von Additiven in einen Polymerschmelzestrom aufweisend
ein Leitungselement (2), in dem der Polymerschmelzestrom geführt ist,
eine Planetenradpumpe mit mindestens n=3 Planetenrädern (36),
jeweils einen Zulaufkanal (20,22) und einen Ablaufkanal (42) pro Planetenrad (36), wobei mindestens ein und maximal n-1 Zulaufkanäle als Additiv-Zulaufkanäle (22) und die verbleibenden Zulaufkanäle als Polymerschmelze-Zulaufkanäle (20) ausgebildet sind, und
ein Einspeiselement (12), das mit den Ablaufkanälen (42) strömend verbunden ist,
**dadurch gekennzeichnet, daß** das Leitungselement einen ersten Kanal (8) und einen seitlich in den ersten Kanal (8) mündenden zweiten Kanal (10) aufweist, wobei sich das Einspeiselement (12) unter Ausbildung eines Ringkanales (16) in den ersten Kanal (8) erstreckt und die der Planetenradpumpe abgewandten Mündungen (14) der Polymerschmelze-Zulaufkanäle (20) um das Einspeiselement (12) angeordnet sind.

2. Vorrichtung nach Anspruch 1, **dadurch gekennzeichnet, daß** die der Planetenradpumpe abgewandten Mündungen (14) der Polymerschmelze-Zulaufkanäle (20) symmetrisch um das Einspeiselement (12) angeordnet sind.

3. Vorrichtung nach einem der Ansprüche 1 oder 2, **dadurch gekennzeichnet, daß** eine der Planetenradpumpe abgewandte Mündung (14) eines Polymerschmelze-Zulaufkanales (20) in einem dem zweiten Kanal (10) abgewandten Bereich des Einspeiselementes (12) angeordnet ist.

4. Vorrichtung nach einem der vorhergehenden Ansprüche, **dadurch gekennzeichnet, daß** das Einspeiselement (12) in einem den Auslaufkanälen (42) abgewandten Bereich konisch ausgebildet ist.

5. Vorrichtung nach einem der vorhergehenden Ansprüche, **dadurch gekennzeichnet, daß** der zweite Kanal (10) in einem rechten Winkel zu dem ersten Kanal (8) angeordnet ist.

6. Vorrichtung nach einem der vorhergehenden Ansprüche, **dadurch gekennzeichnet, daß** zwischen den Ablaufkanälen (42) und dem Einspeiselement (12) mindestens ein statischer Mischer (19a,19b) angeordnet ist.

7. Vorrichtung nach Anspruch 6, **dadurch gekennzeichnet, daß** zwei in Strömungsrichtung hintereinander angeordnete statische Mischer (19a,19b) vorgesehen sind, wobei sich die Ablaufkanäle (42), die ein Additiv-Polymerschmelze-Gemisch führen, in den in Strömungsrichtung ersten statischen Mischer (19b) und sich die Ablaufkanäle (42), die die Polymerschmelze führen, in den in Strömungsrichtung zweiten statischen Mischer (19a) erstrecken.

8. Vorrichtung nach einem einem der Ansprüche 1 bis 5, **dadurch gekennzeichnet, daß** die Planetenradpumpe, die Zulaufkanäle (20,22), die Ablaufkanäle (42) und das Einspeiselement (12) starr miteinander verbunden und über ein gemeinsames Befestigungsmittel an dem Leitungselement befestigt sind.

9. Vorrichtung nach einem der Ansprüche 6 oder 7, **dadurch gekennzeichnet, daß** die Planetenradpumpe, die Zulaufkanäle (20,22), die Ablaufkanäle (42), das Einspeiselement (12) und die statischen Mischer (19,42) starr miteinander verbunden und über ein gemeinsames Befestigungsmittel an dem Leitungselement befestigt sind.

10. Vorrichtung nach einem der Ansprüche 8 oder 9, **dadurch gekennzeichnet, daß** das Befestigungsmittel einen Flansch aufweist.

## Claims

1. Device for premixing and feeding additives to a polymer melt flow comprising
a conduit element (2), in which the polymer melt flow is carried,
a planetary wheel pump having at least n=3 planetary wheels (36),
an inlet duct (20, 22) and an outlet duct (42) respectively for each planetary wheel (36), wherein at least one and a maximum of n-1 inlet ducts are formed as additive inlet ducts (22) and the remaining inlet ducts are formed as polymer melt inlet ducts (20), and
a feeding element (12) which is flowingly connected to the outlet ducts (42),
**characterised in that** the conduit element comprises a first duct (8) and a second duct (10) which issues laterally into the first duct (8), wherein the feeding element (12) extends into the first duct (8) to form an annular duct (16) and the openings (14) in the polymer melt inlet ducts (20) remote from the planetary wheel pump are disposed around the feeding element (12).

2. Device as claimed in claim 1, **characterised in that** the openings (14) in the polymer melt inlet ducts (20) remote from the planetary wheel pump are disposed symmetrically around the feeding element (12).

3. Device as claimed in any of claims 1 or 2, **characterised in that** an opening (14) in a polymer melt inlet duct (20) remote from the planetary wheel pump is disposed in a region of the feeding element (12) remote from the second duct (10).

4. Device as claimed in any of the preceding claims, **characterised in that** the feeding element (12) is formed in a conical manner in a region remote from the outlet ducts (42).

5. Device as claimed in any of the preceding claims, **characterised in that** the second duct (10) is disposed at a right angle to the first duct (8).

6. Device as claimed in any of the preceding claims, **characterised in that** at least one static mixer (19a, 19b) is disposed between the outlet ducts (42) and the feeding element (12).

7. Device as claimed in claim 6, **characterised in that** two static mixers (19a, 19b) are provided which are disposed one behind the other in the direction of flow, wherein the outlet ducts (42) which carry an additive-polymer melt mixture extend into the static mixer (19b) which is first in the direction of flow, and the outlet ducts (42) which carry the polymer melt extend into the static mixer (19a) which is second in the direction of flow.

8. Device as claimed in any of claims 1 to 5, **characterised in that** the planetary wheel pump, the inlet ducts (20, 22), the outlet ducts (42) and the feeding element (12) are rigidly connected together and are attached to the conduit element by a common fastening means.

9. Device as claimed in any of claims 6 or 7, **characterised in that** the planetary wheel pump, the inlet ducts (20, 22), the outlet ducts (42), the feeding element (12) and the static mixers (19, 42) are rigidly connected together and are attached to the conduit element by a common fastening means.

10. Device as claimed in any of claims 8 or 9, **characterised in that** the fastening means comprises a flange.

## Revendications

1. Dispositif pour pré-mélanger et introduire des additifs dans un courant de masse fondue de polymère comportant
un élément de conduit (2) dans lequel est guidé le courant de masse fondue de polymère,
une pompe à roues planétaires ayant au moins n=3 roues planétaires (36),
à chaque fois un canal d'amenée (20, 22) et un canal d'évacuation (42) par roue planétaire (36), où au moins un et au plus n-1 canaux d'amenée sont agencés sous forme de canaux d'amenée d'additifs (22) et les canaux d'amenée restants sont agencés sous forme de canaux d'amenée de masse fondue de polymère (20), et
un élément d'introduction (12) qui est relié par écoulement aux canaux d'évacuation (42),
**caractérisé en ce que** l'élément de conduit comporte un premier canal (8) et un second canal (10) débouchant latéralement dans le premier canal (8), où l'élément d'introduction (12) s'étend dans le premier canal (8) en formant un canal annulaire (16) et les embouchures (14) des canaux d'amenée de masse fondue de polymère (20) distantes de la pompe à roues planétaire sont disposées autour de l'élément d'introduction (12).

2. Dispositif selon la revendication 1, **caractérisé en ce que** les embouchures (14) des canaux d'amenée de masse fondue de polymère (20) distantes de la pompe à roues planétaires sont disposées symétriquement autour de l'élément d'introduction (12).

3. Dispositif selon l'une des revendications 1 ou 2, **caractérisé en ce que** l'une des embouchures (14) d'un canal d'amenée de masse fondue de polymère (20) distantes de la pompe à roues planétaires est disposée dans un domaine de l'élément d'introduction (12) distant du deuxième canal (10).

4. Dispositif selon l'une des revendications précédentes, **caractérisé en ce que** l'élément d'introduction (12) est agencé de manière conique dans un domaine distant des canaux d'évacuation (42).

5. Dispositif selon l'une des revendications précédentes, **caractérisé en ce que** le deuxième canal (10) est disposé à angle droit par rapport au premier canal (8).

6. Dispositif selon l'une des revendications précédentes, **caractérisé en ce qu'**au moins un mélangeur statique (19a, 19b) est disposé entre les canaux d'évacuation (42) et l'élément d'introduction (12).

7. Dispositif selon la revendication 6, **caractérisé en ce que** deux mélangeurs statiques (19a, 19b) disposés l'un derrière l'autre dans la direction de l'écoulement sont prévus, où les canaux d'évacuation (42), qui guident un mélange additifs-masse fondue de polymère, s'étendent dans le premier mélangeur statique (19b) dans la direction de l'écoulement et les canaux d'évacuation (42), qui guident la masse fondue de polymère, s'étendent dans le deuxième mélangeur statique (19a) dans la direction de l'écoulement.

8. Dispositif selon l'une des revendications 1 à 5, **caractérisé en ce que** la pompe à roues planétaires, les canaux d'amenée (20, 22), les canaux d'évacuation (42) et l'élément d'introduction (12) sont reliés entre eux de manière rigide et sont fixés à l'élément de conduit par le biais d'un moyen de fixation commun.

9. Dispositif selon l'une des revendications 6 ou 7, **caractérisé en ce que** la pompe à roues planétaires, les canaux d'amenée (20, 22), les canaux d'évacuation (42), l'élément d'introduction (12) et les mélangeurs statiques (19, 42) sont reliés entre eux de manière rigide et sont fixés à l'élément de conduit par le biais d'un moyen de fixation commun.

10. Dispositif selon l'une des revendications 8 ou 9, **caractérisé en ce que** l'élément de fixation comporte une bride.
